# EUROPEAN PATENT APPLICATION

(11) **EP 4 228 242 A1**
(43) Date of publication of application: **16.08.2023**
(21) Application number: 21885000.6
(22) Date of filing: 20.10.2021
(51) Int. Cl.: H04N 5/232, G06K 9/00, G06F 3/0488

(54) **IMAGE PROCESSING METHOD AND APPARATUS**

(30) Priority: 28.10.2020 CN 202011172099
(71) Applicant: Vivo Mobile Communication Co., Ltd., Dongguan, Guangdong 523863 (CN)
(72) Inventor: MAO, Fangqin, Dongguan, Guangdong 523863 (CN); GUO, Hua, Dongguan, Guangdong 523863 (CN)
(74) Representative: Murgitroyd & Company
(86) International application number: PCT/CN2021/124938
(87) International publication number: WO 2022/089272

(57) **Abstract**

This application discloses an image processing method and apparatus, which relates to the field of communications technologies. The image processing method includes: obtaining a reference makeup image by using a preset method, where the preset method includes at least one of recognizing a target image and scanning a target QR code; obtaining a user image; and obtaining and displaying a target makeup image based on the reference makeup image and the user image, where the target makeup image is an image obtained by transferring a makeup in a first target face image in the reference makeup image to a second target face image in the user image.

## Description

### CROSS-REFERENCE TO RELATED APPLICATION

This application claims priority to Chinese Patent Application No. 202011172099.5 filed in China on October 28, 2020, which is incorporated herein by reference in its entirety.

### TECHNICAL FIELD

This application relates to the field of communications technologies, and in particular to an image processing method and apparatus.

### BACKGROUND

With the development of image processing technologies, image processing methods have increasingly emerged. A user can use these image processing methods to process images to meet their own needs.

Makeup transfer is a new application technology in the field of image processing in recent years. By using this application technology, a user can quickly see their makeup effects under different makeup, thereby meeting the user's need for makeup.

In the prior art, in an application with a makeup transfer function (such as beauty camera), a reference makeup image used to provide a reference makeup is preset, and quantity and types of the reference makeup are limited, which is difficult to meet the user's need for various types of makeup.

### SUMMARY

Embodiments of this application are intended to provide an image processing method and apparatus that can resolve, to a certain extent, a problem that a quantity and types of reference makeup images are limited in a makeup transfer function in the prior art.

According to a first aspect, an embodiment of this application provides an image processing method, and the image processing method includes:
obtaining a reference makeup image by using a preset method, where the preset method includes at least one of recognizing a target image and scanning a target quick response (QR) code;
obtaining a user image; and
obtaining and displaying a target makeup image based on the reference makeup image and the user image, where the target makeup image is an image that is obtained by transferring a makeup in a first target face image in the reference makeup image to a second target face image in the user image.

According to a second aspect, an embodiment of this application provides an image processing apparatus, and the image processing apparatus includes:
a first obtaining module, configured to obtain a reference makeup image by using a preset method, where the preset method includes at least one of recognizing a target image and scanning a target QR code;
a second obtaining module, configured to obtain a user image; and
a processing module, configured to obtain and display a target makeup image based on the reference makeup image and the user image, where the target makeup image is an image that is obtained by transferring a makeup in a first target face image in the reference makeup image to a second target face image in the user image.

According to a third aspect, an embodiment of this application provides an electronic device, including a processor, a memory, and a program or an instruction stored in the memory and capable of running on the processor, where when the program or the instruction is executed by the processor, the steps of the foregoing image processing method according to the first aspect are implemented.

According to a fourth aspect, an embodiment of this application provides a readable storage medium, where the readable storage medium stores a program or an instruction, and when the program or the instruction is executed by a processor, the steps of the foregoing image processing method according to the first aspect are implemented.

According to a fifth aspect, an embodiment of this application provides a chip, where the chip includes a processor and a communications interface, the communications interface is coupled to the processor, and the processor is configured to run a program or an instruction, to implement the image processing method according to the first aspect.

In the embodiments of this application, the reference makeup image is no longer limited to a preset reference makeup image, but can be obtained by using image recognition and QR code scanning, which enriches the obtaining methods of the reference makeup image, increases the quantity and types of the reference makeup image, increases the user's choices of the reference makeup image, and helps the user to view the effect after changing their favorite makeup, thereby meeting the needs of the user for various kinds of makeup.

### BRIEF DESCRIPTION OF DRAWINGS

FIG. 1 is a schematic flowchart of an image processing method according to an embodiment of this application;
FIG. 2 is a schematic diagram of a makeup transfer interface according to an embodiment of this application;
FIG. 3 is a block diagram of an image processing apparatus according to an embodiment of this application;
FIG. 4 is a first schematic block diagram of an electronic device according to an embodiment of this application; and
FIG. 5 is a second schematic block diagram of an electronic device according to an embodiment of this application.

### DESCRIPTION OF EMBODIMENTS

The following clearly and completely describes the technical solutions in embodiments of this application with reference to the accompanying drawings in the embodiments of this application. Apparently, the described embodiments are some rather than all of the embodiments of this application. Based on the embodiments of this application, all other embodiments obtained by a person of ordinary skill in the art without creative efforts fall within the protection scope of this application.

Terms "first" and "second" in the specification and claims of this application are used to distinguish between similar objects, and do not need to be used to describe a specific order or sequence. It should be understood that, the terms termed in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in the specification and the claims, "and/or" represents at least one of connected objects, and a character "/" generally represents an "or" relationship between associated objects.

The following describes in detail the image processing method provided in the embodiments of this application through specific embodiments and application scenarios thereof with reference to the accompanying drawings.

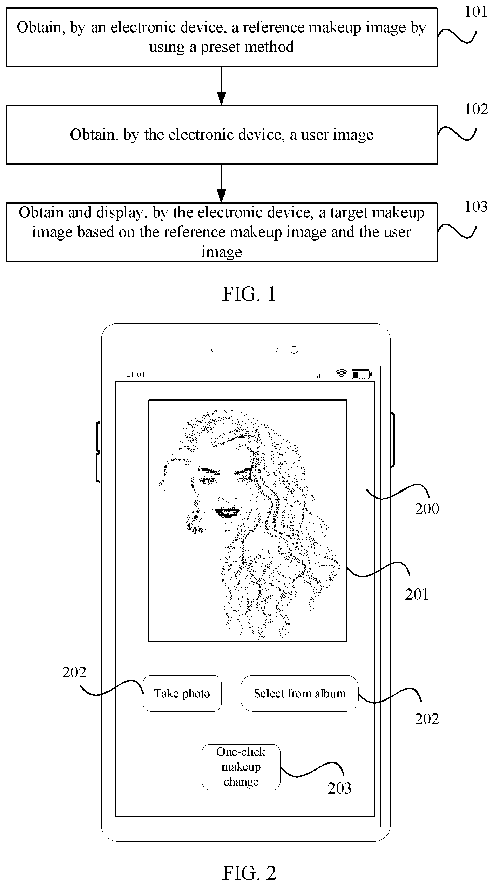

FIG. 1 is a schematic flowchart of an image processing method according to an embodiment of this application. The image processing method may be applied to an electronic device.

As shown in FIG. 1, the image processing method may include the following steps.

Step 101: obtain, by an electronic device, a reference makeup image by using a preset method.

The reference makeup image is used to provide an image of a required makeup when makeup transfer is carried out.

The preset method may include at least one of recognizing a target image and scanning a target QR code.

In an embodiment of this application, the reference makeup image can be obtained by using the method of recognizing a target image. The target image may be an image displayed on a display screen of the electronic device. For example, there is a wallpaper image displayed on a display screen of a mobile phone. If the mobile phone recognizes that there is a face image in the wallpaper image by using an image recognition function (such as screen recognition function), the wallpaper image may be used as the reference makeup image. The target image may also be an image displayed on a display screen of another electronic device. For example, an image displayed on a display screen of a second mobile phone can be collected by using a camera application in a first mobile phone, and if the collected image has a face image, the collected image may be used as the reference makeup image. The target image may also be an image printed on an object such as a celebrity poster and can be collected by using a camera application in the mobile phone. When it is recognized that the collected image has a face image, the collected image may be used as the reference makeup image. It may be understood that the target image may also be other types of images. Examples are not exhaustively illustrated herein.

In this embodiment of this application, the reference makeup image can also be obtained by using the method of scanning a target QR code. The target QR code is a QR code that can trigger the makeup transfer function. For example, there is a QR code in the lower right corner of a celebrity poster. There is a preset correspondence between the QR code and the makeup transfer function. By scanning the QR code, the makeup transfer function can be activated and an electronic version of the celebrity poster can be obtained. The electronic version of the celebrity poster is used as the reference makeup image in the makeup transfer.

As shown in FIG. 1, the image processing method further includes: step 102: obtain, by the electronic device, a user image.

The user image is an image that includes a user face image.

In this embodiment of this application, in addition to the reference makeup image, the user image is also required, to transfer a makeup in the reference makeup image to the user image.

As shown in FIG. 1, the image processing method further includes: step 103: obtain and display, by the electronic device, a target makeup image based on the reference makeup image and the user image.

The target makeup image in this embodiment of this application is an image that is obtained by transferring a makeup in a first target face image in the reference makeup image to a second target face image in the user image.

When the reference makeup image includes one face image, the first target face image is the only face image in the reference makeup image. When the reference makeup image includes at least two face images, the first target face image may be at least one of the face images. Specifically, a user can make a selection. For example, an input operation by the user on the first target face image in the reference makeup image is received. In response to the input operation, the makeup in the first target face image is obtained. Similarly, when the user image includes one face image, the second target face image is the only face image in the user image. When the reference makeup image includes at least two face images, the second target face image may be at least one of the face images. Specifically, the user can make a selection. For example, an input operation by the user on the second target face image in the user image is received. In response to the input operation, the makeup obtained from the first target face image is transferred to the second target face image to obtain a user makeup image. When there are at least two first target face images, and there are also at least two second target face images, the makeup of the first target face image can be transferred to the second target face image in the same selection order based on a selection order of the first target face image and a selection order of the second target face image. If there are more second target face images than the first target face images, makeup of the rest of the second target face images can be changed based on the makeup randomly obtained from the second target face image.

After the reference makeup image and the user image are obtained, makeup transfer can be performed. That is, the makeup in the first target face image in the reference makeup image is obtained, and the obtained makeup is transferred to the second target face image in the user image, so that the second target face image presents a makeup effect of the first target face image for users to view.

In the embodiments of this application, the reference makeup image is no longer limited to a preset reference makeup image, but can be obtained by using image recognition and QR code scanning, which enriches the obtaining methods of the reference makeup image, increases the quantity and types of the reference makeup image, increases the user's choices of the reference makeup image, and helps the user to view the effect after changing their favorite makeup, thereby meeting the needs of the user for various kinds of makeup.

Optionally, in a case that the preset method includes recognizing the target image, in step 101, before the obtaining a reference makeup image by using a preset method, the image processing method may further include:
receiving a first input by a user to a first control; and in response to the first input, enabling an image recognition function to use an image displayed on the display screen as the target image for recognition.

The first control hovered on any interface of a display screen or on an application interface of a target application.

It can be learned from the previous description that the target image may be the image displayed on the display screen of the electronic device. Therefore, the electronic device can recognize the image displayed on the display screen as the target image for recognition by using the image recognition function. In this embodiment of this application, for the method of obtaining the reference makeup image by using the image recognition function, a control (hereinafter referred to as a first control) can be set for the image recognition function, and the user can start the image recognition function by using the control, so that the user can operate according to their own needs. The image recognition function may be a picture recognition function, a screen recognition function, and the like.

Optionally, the first control that is set for the image recognition function may be hovered on any interface of a display screen. In this case, when the first input by the user to the first control is received, the image recognition function can be activated in response to the first input to recognize the image displayed on the display screen. The first control is hovered on any interface of a display screen, so that when the user sees their favorite makeup image, the user can enable the image recognition function at any time for image recognition, so as to obtain the reference makeup image for makeup transfer. In this way, the makeup transfer function is no longer limited to a certain application. In a case that the reference makeup image and the user image can be obtained, the makeup transfer function can be triggered, which increases the scope of the application.

Optionally, the first control that is set for the image recognition function can also be displayed in an application interface of the target application. In this case, in a case that it is detected that the target application runs in the foreground, the first control can be automatically displayed in the application interface of the target application. After the first input by the user to the first control is received, the image recognition function is activated in response to the first input, so as to recognize the image displayed in the display screen. The target application may be an application that is likely to show a makeup image, such as a wallpaper application, a short video application, a photo album application, and the like. In this embodiment of this application, a correspondence between the application and the first control can be preset, so that in a case that a corresponding application runs in the foreground, the first control is automatically displayed on the application interface of the corresponding application for the user to operate. This presetting can be made manually by the user or by default.

Optionally, in a case that the preset method includes recognizing the target image, step 101: obtain a reference makeup image by using a preset method may include: in a process of recognizing the target image, determining an image that satisfies a preset condition as the reference makeup image.

The preset condition may be that the face image is included and a resolution of the image is greater than or equal to a preset resolution. Certainly, to get a better reference makeup image, in addition to the above two conditions, one condition can be added. That is, the target facial features in the first target face image are not blocked, and the target facial features may include at least one of eyebrow features, eye features, nose features, cheek features, and mouth features. The more types of facial features included in the target facial features, the better the makeup can be obtained in the reference makeup image. If the reference makeup image does not meet the preset conditions, prompt information can be output to prompt that the user reselects the reference makeup image.

There may be at least one reference makeup image. When there are at least two reference makeup images, all the reference makeup images include one face image. A plurality of reference makeup images can reflect the makeup in the reference makeup image more comprehensively, so as to obtain a better makeup.

Optionally, step 102: obtain a user image may include: after the obtaining the reference makeup image, displaying a makeup transfer interface; receiving a second input by a user to a second control on the makeup transfer interface; and in response to the second input, obtaining the user image from an album application, or obtaining the user image photographed by using a camera application.

In this embodiment of this application, after obtaining the reference makeup image, a makeup transfer interface can be displayed, as shown in FIG. 2. In the makeup transfer interface 200, the reference makeup image 201 and the second control 202 for obtaining the user image can be displayed.

In addition, the makeup transfer interface can also display introduction information of the makeup transfer. The user can obtain the user image by touching the second control. In a case that the electronic device receives the second input by the user to the second control on the makeup transfer interface, the electronic device obtains, in response to the second input of the user to the second control in the makeup transfer interface, the user image from the album application or captures the user image through the camera application.

The second control may be a picture selection control (such as a "Select from album" control 202 in FIG. 2) or a take-photo control (such as the "Take photo" control 202 in FIG. 2). After the user triggers the picture selection control, the display interface of the album application can be invoked, so that the user can select the user image from the album application. After the user triggers the take-photo control, the camera application can be enabled to obtain the user image by using the camera application.

Optionally, to present a better makeup change effect, after the user image is obtained, it may be determined whether the user image meets the preset conditions. The preset conditions may include: that the user image includes a face image, and that the target facial features in the second target face image in the face image are not blocked. The target facial features include at least one of eyebrow features, eye features, nose features, cheek features, and mouth features. The more types of facial features included in the target facial features, the better the makeup change effect can be presented. If the user image does not meet the preset conditions, prompt information can be output to prompt that the user reselects the user image.

Optionally, step 103: obtaining and displaying the target makeup image based on the reference makeup image and the user image may include:
detecting facial features of the first target face image in the reference makeup image and the second target face image in the user image; and in a case that target facial features of the first target face image and the second target face image are not blocked, obtaining and displaying, based on the reference makeup image and the user image, the target makeup image.

The target facial features include at least one of eyebrow features, eye features, nose features, cheek features, and mouth features.

In this embodiment of this application, in a process of obtaining and displaying the target makeup image based on the reference makeup image and the user image, it may be first determined whether the target facial features in the first target face image and the second target face image are blocked. If the target facial features are not blocked, an operation for changing the makeup can be performed. If the target facial features of any face image in the first target face image and the second target face image are blocked, it is considered that the conditions for processing makeup change are not met, and prompt information can be output to prompt that the user performs reselection for the user image and/or the reference makeup image that do not meet the conditions for makeup change processing. It can be understood that whether the target facial features in the face image are blocked can also be determined, when the user image and the reference makeup image are obtained as described above. This can be set according to an actual need.

Optionally, in this embodiment of this application, a third control used to trigger the makeup transfer process can also be displayed on the makeup transfer interface (for example, "one-click makeup change" control 203 as shown in FIG. 2). When the electronic device receives a third input by the user to the third control, the electronic device can obtain and display the target makeup image based on the obtained reference makeup image and the user image.

Optionally, in this embodiment of this application, the operation for processing makeup transfer can be implemented by a terminal device. That is, the terminal device obtains the makeup in the reference makeup image, and transfers the obtained makeup to the user image to obtain the target makeup image. The makeup transfer is implemented by the terminal device, so that the operation of processing makeup transfer is not limited to network and is more convenient to use.

Optionally, in the embodiment of this application, the operation of processing makeup transfer can also be implemented by a server. That is, the terminal device sends the reference makeup image and the user image to the server, the server obtains a makeup in the reference makeup image, transfers the obtained makeup to the user image, obtains the target makeup image, and sends the target makeup image to the terminal device for display. The makeup transfer is implemented by the server with fast processing speed, which reduces a data processing amount of the terminal device, helps reduce a pressure on the processor of the terminal device, and reduces power consumption of the terminal device. In a case that the operation of processing makeup transfer is implemented by the server, whether the target facial features of the face image in the reference makeup image and the user image are blocked can be determined by the server or by the terminal device. When the determination is performed by the server, when the server determines that the target facial features of the first target face image in the reference makeup image and/or the target facial features of the second target face image in the user image are blocked, the server can feed back prompt information that the makeup change fails to the terminal device, so that the terminal device can obtain the reference makeup image and/or the user image again.

Optionally, in this embodiment of this application, when the makeup transfer is performed, makeup code of the reference makeup image can be extracted by using a deep learning algorithm and a color space, and face attribute code of the user image can be extracted by using the deep learning algorithm. Then the extracted makeup code and the face attribute code can be used to obtain the user image after the makeup is changed (that is, the target makeup image) by decoding.

Optionally, in this embodiment of this application, after the target makeup image is obtained, an image matting interface can also be displayed, so that the user can perform imaging matting on the target makeup image, and perform background replacement and other image processing operations.

In conclusion, in the embodiments of this application, the reference makeup image is no longer limited to a preset reference makeup image, but can be obtained by using image recognition and QR code scanning, which enriches the obtaining methods of the reference makeup image, increases the quantity and types of the reference makeup image, increases the user's choices of the reference makeup image, and helps the user to view the effect after changing their favorite makeup, thereby meeting the needs of the user for various kinds of makeup.

It should be noted that an execution subject of the image processing method according to an embodiment of this application may be an image processing apparatus, or a control module for performing the image processing method in the image processing apparatus. In this embodiment of this application, the image processing apparatus according to an embodiment of this application is described by using an example in which the image processing apparatus performs the image processing method.

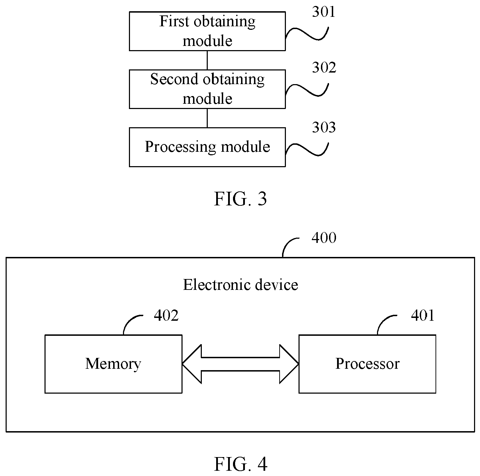

FIG. 3 is a schematic block diagram of an image processing apparatus according to an embodiment of this application. The image processing apparatus may be applied to an electronic device.

As shown in FIG. 3, the image processing apparatus includes:
a first obtaining module 301, configured to obtain a reference makeup image by using a preset method, where the preset method includes at least one of recognizing a target image and scanning a target QR code;
a second obtaining module 302, configured to obtain a user image; and
a processing module 303, configured to obtain and display, based on the reference makeup image and the user image, a target makeup image, where the target makeup image is an image that is obtained by transferring a makeup in a first target face image in the reference makeup image to a second target face image in the user image.

Optionally, the image processing apparatus further includes:
a first receiving module, configured to receive a first input by a user to a first control, where the first control is hovered on any interface of a display screen or on an application interface of a target application; and
a first response module, configured to, in response to the first input, enable an image recognition function to use an image displayed on the display screen as the target image for recognition.

Optionally, the first obtaining module 301 includes:
a determining unit, configured to, in a process of recognizing the target image, determine an image that satisfies a preset condition as the reference makeup image.

The preset condition is that the face image is included and a resolution of the image is greater than or equal to a preset resolution.

Optionally, the second obtaining module 302 includes:
a display unit, configured to, after the obtaining the reference makeup image, display a makeup transfer interface;
a receiving unit, configured to receive a second input by a user to a second control on the makeup transfer interface; and
a response module, configured to obtain, in response to the second input, the user image from an album application, or obtain the user image photographed by using a camera application.

Optionally, the processing module 303 includes:
a detection unit, configured to detect facial features of the first target face image in the reference makeup image and the second target face image in the user image; and
a processing unit, configured to, in a case that target facial features of the first target face image and the second target face image are not blocked, obtain and display the target makeup image based on the reference makeup image and the user image, where the target facial features include at least one of eyebrow features, eye features, nose features, cheek features, and mouth features.

In the embodiments of this application, the reference makeup image is no longer limited to a preset reference makeup image, but can be obtained by using image recognition and QR code scanning, which enriches the obtaining methods of the reference makeup image, increases the quantity and types of the reference makeup image, increases the user's choices of the reference makeup image, and helps the user to view the effect after changing their favorite makeup, thereby meeting the needs of the user for various kinds of makeup.

The image processing apparatus in the embodiments of this application may be an apparatus, or a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, a vehicle-mounted terminal, a wearable device, an ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, NAS), a personal computer (personal computer, PC), a television (television, TV), a teller machine, a self-service machine, or the like. This is not specifically limited in the embodiments of this application.

The image processing apparatus in this embodiment of this application may be an apparatus with an operating system. The operating system may be an Android (Android) operating system, an iOS operating system, or another possible operating system, which is not specifically limited in this embodiment of this application.

The image processing apparatus provided in this embodiment of this application can implement the processes implemented in the image processing method embodiments in FIG. 1. To avoid repetition, details are not described herein again.

Optionally, the embodiments of this application further provide an electronic device. As shown in FIG. 4, the electronic device 400 includes a processor 401, a memory 402, and a program or an instruction stored in the memory 402 and capable of running on the processor 401. When the program or the instruction is executed by the processor 401, the processes of the foregoing image processing method embodiments are implemented, with the same technical effects achieved. To avoid repetition, details are not described herein again.

It should be noted that the electronic device in the embodiments of this application includes the mobile electronic device and the non-mobile electronic device.

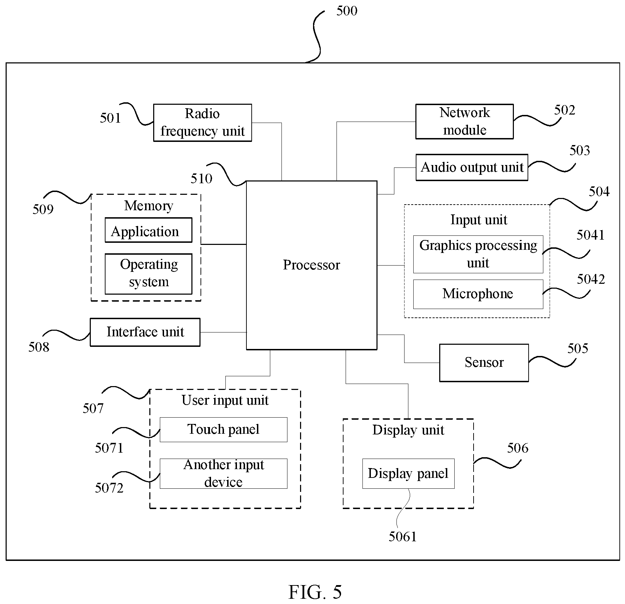

FIG. 5 is a schematic diagram of a hardware structure of an embodiment of an electronic device according to this application.

As shown in FIG. 5, the electronic device 500 includes, but is not limited to, components such as a radio frequency unit 501, a network module 502, an audio output unit 503, an input unit 504, a sensor 505, a display unit 506, a user input unit 507, an interface unit 508, a memory 509, and a processor 510.

A person skilled in the art can understand that the electronic device 500 may further include a power supply (for example, a battery) that supplies power to the components. The power supply may be logically connected to the processor 510 through a power management system, so as to implement functions such as charging management, discharging management, and power consumption management through the power management system. A structure of the electronic device shown in FIG. 5 does not constitute a limitation on the electronic device, and may include more or fewer parts than those shown in the figure, or combine some components, or have different part arrangements. Details are not described herein again.

The processor 510 is configured to: obtain a reference makeup image by using a preset method; obtain a user image; and obtain and display, based on the reference makeup image and the user image, a target makeup image. The preset method includes: at least one of recognizing a target image and scanning a target QR code. The target makeup image is an image obtained by transferring a makeup in a first target face image in the reference makeup image to a second target face image in the user image.

Optionally, the user input unit 507 is configured to receive a first input by a user to a first control. The processor 510 is further configured to, in response to the first input, enable an image recognition function to use an image displayed on the display screen as the target image for recognition. The first control is hovered on any interface of a display screen or on an application interface of a target application.

Optionally, the processor 510 is further configured to, in a process of recognizing the target image, determine an image that satisfies a preset condition as the reference makeup image. The preset condition is that the face image is included and a resolution of the image is greater than or equal to a preset resolution.

Optionally, the processor 510 is further configured to, after the obtaining the reference makeup image, display a makeup transfer interface. The user input unit 507 is configured to receive a second input by a user to a second control on the makeup transfer interface. The processor 510 is further configured to: in response to the second input, obtain the user image from an album application, or obtain the user image photographed by using a camera application.

Optionally, the processor 510 is further configured to: detect facial features of the first target face image in the reference makeup image and the second target face image in the user image; and in a case that target facial features of the first target face image and the second target face image are not blocked, obtain and display, based on the reference makeup image and the user image, the target makeup image. The target facial features include at least one of eyebrow features, eye features, nose features, cheek features, and mouth features.

In the embodiments of this application, the reference makeup image is no longer limited to a preset reference makeup image, but can be obtained by using image recognition and QR code scanning, which enriches the obtaining methods of the reference makeup image, increases the quantity and types of the reference makeup image, increases the user's choices of the reference makeup image, and helps the user to view the effect after changing their favorite makeup, thereby meeting the needs of the user for various kinds of makeup.

It should be understood that, in this embodiment of this application, the input unit 504 may include a graphics processing unit (Graphics Processing Unit, GPU) 5041 and a microphone 5042, and the graphics processing unit 5041 processes image data of a still picture or a video obtained by an image capture apparatus (such as a camera) in a video capture mode or an image capture mode. The display unit 506 may include a display panel 5061, and the display panel 5061 may be configured in a form of a liquid crystal display, an organic light-emitting diode, or the like. The user input unit 507 includes a touch panel 5071 and another input device 5072. The touch panel 5071 is also referred to as a touchscreen. The touch panel 5071 may include two parts: a touch detection apparatus and a touch controller. The another input device 5072 may include but is not limited to a physical keyboard, a functional button (such as a volume control button or a power on/off button), a trackball, a mouse, and a joystick. Details are not described herein. The memory 509 may be configured to store a software program and various data, including but not limited to an application program and an operating system. The processor 510 may be integrated with an application processor and a modem processor. The application processor mainly processes an operating system, a user interface, an application program, and the like, and the modem processor mainly processes wireless communication. It can be understood that, alternatively, the modem processor may not be integrated into the processor 510.

An embodiment of this application further provides a readable storage medium. The readable storage medium stores a program or an instruction. When the program or the instruction is executed by a processor, the processes in the foregoing image processing method embodiments are implemented, and a same technical effect can be achieved. To avoid repetition, details are not described herein again.

The processor is a processor in the electronic device in the foregoing embodiment. The readable storage medium includes a computer-readable storage medium. Examples of the computer-readable storage medium include a non-transitory computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communications interface, and the communications interface is coupled to the processor. The processor is configured to run a program or an instruction, to implement various processes of the foregoing image processing method embodiments, with the same technical effects achieved. To avoid repetition, details are not described herein again.

It should be understood that the chip mentioned in this embodiment of this application may also be referred to as a system-level chip, a system chip, a chip system, or a system on a chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of more restrictions, an element defined by the statement "including a..." does not exclude another same element in a process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

The various aspects of this application have been described above with reference to the flowcharts and/or block diagrams of the method, the apparatus (system), and the computer program product according to the embodiments of this application. It should be understood that each block in the flowchart and/or block diagram and a combination of blocks in the flowchart and/or block diagram may be implemented by a computer program instruction. These computer program instructions may be provided for a general-purpose computer, a dedicated computer, or a processor of another programmable data processing apparatus to generate a machine, so that when these instructions are executed by the computer or the processor of the another programmable data processing apparatus, specific functions/actions in one or more blocks in the flowcharts and/or in the block diagrams are implemented. The processor may be but is not limited to a general purpose processor, a dedicated processor, a special application processor, or a field programmable logic circuit. It can be further understood that each block in the block diagram or the flowchart and a combination of blocks in the block diagram or the flowchart may be implemented by using dedicated hardware that performs a specified function or operation, or may be implemented by using a combination of dedicated hardware and a computer instruction.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of this application essentially or the part contributing to existing technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to execute the methods described in the embodiments of this application.

The embodiments of this application are described with reference to the accompanying drawings. However, this application is not limited to the foregoing specific implementations. The foregoing specific implementations are merely examples, but are not limiting. A person of ordinary skill in the art may make many forms without departing from the objective and the scope of the claims of this application, and these forms all fall within the protection scope of this application.

## Claims

1. An image processing method, comprising:
obtaining a reference makeup image by using a preset method, wherein the preset method comprises at least one of recognizing a target image and scanning a target quick response QR code;
obtaining a user image; and
obtaining and displaying a target makeup image based on the reference makeup image and the user image, wherein the target makeup image is an image that is obtained by transferring a makeup in a first target face image in the reference makeup image to a second target face image in the user image.

2. The image processing method according to claim 1, wherein in a case that the preset method comprises recognizing the target image, before the obtaining a reference makeup image by using a preset method, the method further comprises:
receiving a first input by a user to a first control, wherein the first control is hovered on any interface of a display screen or on an application interface of a target application; and
in response to the first input, enabling an image recognition function to use an image displayed on the display screen as the target image for recognition.

3. The image processing method according to claim 1, wherein in a case that the preset method comprises recognizing the target image, the obtaining a reference makeup image by using a preset method comprises:
in a process of recognizing the target image, determining an image that satisfies a preset condition as the reference makeup image, wherein the preset condition is that a face image is comprised and a resolution of the image is greater than or equal to a preset resolution.

4. The method according to claim 1, wherein the obtaining a user image comprises:
after the obtaining the reference makeup image, displaying a makeup transfer interface;
receiving a second input by a user to a second control on the makeup transfer interface; and
in response to the second input, obtaining the user image from an album application, or obtaining the user image photographed by using a camera application.

5. The image processing method according to claim 1, wherein the obtaining and displaying a target makeup image based on the reference makeup image and the user image, comprises:
detecting facial features of the first target face image in the reference makeup image and the second target face image in the user image; and
in a case that target facial features of the first target face image and the second target face image are not blocked, obtaining and displaying the target makeup image based on the reference makeup image and the user image, wherein the target facial features comprise at least one of eyebrow features, eye features, nose features, cheek features, and mouth features.

6. An image processing apparatus, comprising:
a first obtaining module, configured to obtain a reference makeup image by using a preset method, wherein the preset method comprises at least one of recognizing a target image and scanning a target quick response QR code;
a second obtaining module, configured to obtain a user image; and
a processing module, configured to obtain and display a target makeup image based on the reference makeup image and the user image, wherein the target makeup image is an image that is obtained by transferring a makeup in a first target face image in the reference makeup image to a second target face image in the user image.

7. The image processing apparatus according to claim 6, wherein the image processing apparatus further comprises:
a first receiving module, configured to receive a first input by a user to a first control, wherein the first control is hovered on any interface of a display screen or on an application interface of a target application; and
a first response module, configured to, in response to the first input, enable an image recognition function to use an image displayed on the display screen as the target image for recognition.

8. The image processing apparatus according to claim 6, wherein the first obtaining module comprises:
a determining unit, configured to determine an image that satisfies a preset condition as the reference makeup image in a process of recognizing the target image, wherein the preset condition is that a face image is comprised and a resolution of the image is greater than or equal to a preset resolution.

9. The image processing apparatus according to claim 6, wherein the second obtaining module comprises:
a display unit, configured to, after the obtaining the reference makeup image, display a makeup transfer interface;
a receiving unit, configured to receive a second input by a user to a second control on the makeup transfer interface; and
a response module, configured to obtain, in response to the second input, the user image from an album application, or obtain the user image photographed by using a camera application.

10. The image processing apparatus according to claim 6, wherein the processing module comprises:
a detection unit, configured to detect facial features of the first target face image in the reference makeup image and the second target face image in the user image; and
a processing unit, configured to, in a case that target facial features of the first target face image and the second target face image are not blocked, obtain and display the target makeup image based on the reference makeup image and the user image, wherein the target facial features comprise at least one of eyebrow features, eye features, nose features, cheek features, and mouth features.

11. An electronic device, comprising a processor, a memory, and a computer program stored in the memory and executable on the processor, wherein when the computer program is executed by the processor, steps of the image processing method according to any one of claims 1 to 5 are implemented.

12. An electronic device, configured to perform the steps of the image processing method according to any one of claims 1 to 5.

13. A computer-readable storage medium, wherein the computer-readable storage medium stores a computer program, and when the computer program is executed by a processor, steps of the image processing method according to any one of claims 1 to 5 are implemented.

14. A computer program product, wherein the computer program product is stored in a non-volatile storage medium, and the program product is executed by at least one processor, to implement steps of the image processing method according to any one of claims 1 to 5.

15. A chip, wherein the chip comprises a processor and a communications interface, the communications interface is coupled to the processor, and the processor is configured to run a program or an instruction, to implement steps of the image processing method according to any one of claims 1 to 5.
